# EUROPEAN PATENT APPLICATION

(11) **EP 4 170 158 A1**
(43) Date of publication of application: **26.04.2023**
(21) Application number: 21204165.1
(22) Date of filing: 22.10.2021
(51) Int. Cl.: F03D 13/10, F03D 1/06

(54) **METHOD OF MOUNTING A WIND TURBINE ROTOR BLADE**

(71) Applicant: Siemens Gamesa Renewable Energy A/S, 7330 Brande (DK)
(72) Inventor: Sørensen, Ruben Bak, 7080 Børkop (DK)
(74) Representative: SGRE-Association

(57) **Abstract**

The invention describes a method of mounting a wind turbine rotor blade (R2, R3) to a partial assembly (AR1, AR12), the partial assembly (AR1, AR12) comprising a number of rotor blades (R1) mounted to a hub (10) which in turn is connected to a rotor shaft (10R) of a wind turbine (1), the method comprising the steps of
A) effecting a rotation of the rotor shaft (10R) to turn the partial assembly (AR1, AR12) from its starting position through an initial arc (β₀);
B1) allowing the partial assembly (AR1, AR12) to swing through a free swing arc (a) in the opposite direction;
B2) effecting a rotation of the rotor shaft (10R) to extend the free swing arc (a) by a further arc (β);
C) repeating steps B1 and B2 until the partial assembly (AR1, AR12) has reached a final position at an angular displacement of 120° to the initial position.

## Description

### Background

The installation of a wind turbine involves various stages, one of which is the assembly of the aerodynamic rotor, i.e. the hub and rotor blades. Generally, the hub is located at the front of the nacelle, and rotor blades (usually three) are mounted equidistantly about the hub. In the case of very long rotor blades, these are usually mounted one after another to the hub, i.e. a single rotor blade is hoisted into place and attached, followed by the next. This is in contrast to shorter rotor blades, which can be mounted to the hub at ground level, and the entire assembly is then raised to the level of the nacelle.

There are various ways of raising a long rotor blade to hub height for mounting. In one approach, a rotor blade is held horizontally while being hoisted by a crane to the level of the hub, so that the rotor blade is in the "3 o'clock" position while being connected to the hub. The rotor is then turned through 120°, and the next rotor blade is hoisted horizontally into place, etc. This approach has a practical advantage if the rotor blades are already organized in a horizontal orientation during transport to the installation site, for example in a holding rack on board an installation vessel. However, the aerodynamic forces arising as wind passes over the rotor blade can lead to severe oscillations which make the installation procedure hazardous. Wind conditions at the installation site must be stable, and a safe "weather window" for this type of installation procedure may therefore be unfavourably short.

In an alternative approach, a rotor blade is lifted in a vertical orientation, i.e. the rotor blade is held in the "6 o'clock" position while being connected to the hub. This approach is less dependent on weather conditions.

In each case, after mounting a rotor blade, it is necessary to turn the hub through 120° to receive the next rotor blade. This can be done using a dedicated rotating tool, for example. In the case of an offshore installation site, the rotating tool can be powered by an external power supply such as a diesel generator on board the installation vessel, for example. The blade mounting procedure for each wind turbine must be scheduled to include an initial step of connecting the external power supply to turn the hub, and a final step of disconnecting the external power supply again. Therefore, the need to provide and connect such an external power supply adds significantly to the overall cost of installation.

In an alternative approach, when the wind turbine implements a full-scale converter between generator and grid, the full-scale converter can be controlled to turn the rotor shaft and therefore also the hub. This mode of operation may be referred to as "motoring mode". Turning the partially assembled aerodynamic rotor (i.e. the hub with one rotor blade already mounted, or with two rotor blades already mounted, referred to in the following as the "partial assembly") is associated with a large peak power consumption. This is because the weight of the already mounted rotor blades increases the amount of work needed to turn the rotor shaft. The amount of work necessary to turn the partial assembly is directly proportional to the length and mass of the rotor blades. Generally, the required power cannot be delivered by a backup power supply of the wind turbine. For example, a backup power supply may have a peak power limit, i.e. the load or consumer cannot draw a current that exceeds a maximum. Therefore, in order to provide the necessary power, the full-scale converter is generally connected to a large-capacity external power supply such as a diesel generator as described above.

The advantage of using the full-scale converter to turn the hub is that an external rotation tool is no longer required, resulting in favourable cost savings. However, this approach still involves the time-consuming steps of connecting an external power supply to the wind turbine's full-scale converter before mounting the first rotor blade, and disconnecting the external power supply again after mounting the final rotor blade. The cost savings of this approach are therefore limited.

It is therefore an object of the invention to provide an improved way of using the full-scale converter of a wind turbine to turn the hub during a rotor blade installation procedure.

This object is achieved by the claimed method of mounting a wind turbine rotor blade and by the claimed wind turbine.

### Description

The inventive method describes a way of mounting a wind turbine rotor blade to a partially assembled aerodynamic rotor. This partial assembly may be assumed to comprise at least one rotor blade already mounted to the hub at the front of the nacelle. The hub is connected to a rotor shaft which leads to the generator. The method can be applied to any wind turbine that deploys a full-scale converter (FSC).

When the method is to be applied, the partially assembled aerodynamic rotor may be assumed to be in a starting position, for example a starting position in which the previously mounted rotor blade is in a horizontal position, for example a "three o'clock" position, and the partial assembly must be turned through 120° so that the next rotor blade can be lifted horizontally into place for mounting at the "three o'clock" position.

In the following, without restricting the invention in any way, the partially assembled aerodynamic rotor may be assumed to be in a starting position in which the previously mounted rotor blade is pointing vertically downward (at the "six o'clock" position). Each rotor blade shall be assumed to be lifted into place in a vertical orientation as described above.

According to the invention, the method comprises the steps of:
A) effecting a rotation of the rotor shaft to turn the partially assembled aerodynamic rotor from its starting position through an initial arc;
B1) allowing the partial assembly to swing through a "free swing" arc in the opposite direction, i.e. the force of gravity is allowed to act on the partial assembly so that its momentum carries it through an arc as the total mass of the partial assembly seeks an equilibrium position;
B2) effecting a rotation of the rotor shaft to extend that "free swing" arc by a further "boost" arc; and
C) repeating steps B1 and B2 until the partial assembly has reached a final position. In a most common arrangement, the aerodynamic rotor has three rotor blades, and the final position is at an angular displacement of 120° to the initial position.

As explained in the introduction, the prior art method of turning a partially assembled aerodynamic rotor through 120° between rotor blade mounting steps is associated with large peak power consumption. The invention is based on the insight that the peak power consumption can be reduced significantly by exploiting the gravitational force acting on the partial assembly. By allowing the partial assembly to "swing" through an arc and then - towards the end of that "free swing" arc, turning the rotor shaft to turn the hub through a further "boost" arc, the partially assembled aerodynamic rotor can swing back and forth, through increasingly large arcs, until it reaches an orientation in which the next rotor blade can be mounted.

An advantage of the inventive method is that less power is needed to assemble the aerodynamic rotor. If power is supplied by an external power supply such as a diesel generator, the inventive method reduces the required capacity and utilizes the fuel more economically. The inventive method can also remove the need for an external power supply as will be explained below.

The wind turbine to which the method can be applied may be any wind turbine that deploys a full-scale converter between its generator and a collection system. The wind turbine design can be based on a synchronous generator, an asynchronous generator, a permanent magnet generator, etc. As will be known to the skilled person, a full-scale converter comprises a generator-side converter configured to convert AC electric power to DC electric power, and a line-side converter configured to convert DC electric power to AC electric power at a specific frequency (e.g. 50 Hz). The FSC provides voltage regulation capability and effectively decouples the generator from the collector system or grid.

The inventive wind turbine further comprises a controller that is configured to control the full-scale converter to carry out the steps of the method during the rotor blade mounting procedure.

Particularly advantageous embodiments and features of the invention are given by the dependent claims, as revealed in the following description. Features of different claim categories may be combined as appropriate to give further embodiments not described herein.

In the following, without restricting the invention in any way, it may be assumed that the wind turbine is a horizontal-axis wind turbine which, when assembly is complete, has an aerodynamic rotor comprising three rotor blades mounted to the hub. At the outset of the inventive method, it may be assumed that one rotor blade has already been connected to the hub. That first rotor blade is in the "six o'clock" position, i.e. pointing downwards. The hub is connected to a rotor shaft which leads directly - or indirectly via a gearbox - to the generator. Since the three rotor blades are equidistantly arranged about the hub, the final position of the hub - after performing the inventive method to turn the hub in readiness for mounting the next rotor blade - is at an angular displacement of 120° relative to its initial position.

In a preferred embodiment of the invention, a rotation of the rotor shaft during the rotor blade mounting procedure is effected by control of the full-scale converter. In other words, the inventive method does not need any external rotation tool to turn the hub during the rotor blade mounting procedure. To turn the rotor shaft, the full-scale converter is operated to inject currents into the stator coils in such as way as to induce a slowly rotating magnetic field, which in turn effects a rotation of the rotor shaft, and therefore also a rotation of the partial assembly.

As indicated above, the need to provide an external power supply for turning the hub can add significantly to the overall cost of assembling the ar. Therefore, in a further preferred embodiment of the invention, a backup power supply of the wind turbine is used to provide power to the full-scale converter during the assembly procedure. The backup power supply may be assumed to be a battery, preferably with a capacity of several hundred kWh.

The hub can oscillate back and forth repeatedly as many times as required in order to reach its final position. In a preferred embodiment of the invention, a first step comprises controlling the FSC to turn the hub through an initial arc. Preferably, this initial arc is large enough so that, when "released", the partial assembly will swing back freely in the opposite direction through an arc that is about twice as large as the initial arc. However, the mass of the partial assembly requires a significant effort on the part of the FSC, i.e. a significant quantity of power is required to turn the rotor shaft and partial assembly. Therefore, in a preferred embodiment of the invention, the size of the initial arc is chosen under consideration of the mass of the partial assembly and on the power limitation of the backup power supply. For example, the initial arc might be in the order of 30°.

When released by the FSC, the rotor shaft is free to turn, and the unbalanced mass of the partial assembly results in a free swing movement of the hub. The momentum of the partial assembly carries it past a vertical axis (through the centre of the hub) and through to the other side. Ultimately, the force of gravity will begin to slow the rotation of the partial assembly. At a suitable point, for example just before the acceleration of the partial assembly reduces to zero, the FSC again "kicks in" to turn the rotor shaft further in that same direction, effectively boosting the arc of travel of the partial assembly. A further arc or "boost arc" can be in the order of 10 - 20°, for example. Of course, as the skilled person will appreciate, computation of suitable angles for the initial arc and the boost arcs can depend on various factors such as rotor blade mass, rotor blade length, pitch angle, etc.

In a further preferred embodiment of the invention, the wind turbine comprises a means of monitoring the rotational velocity of the rotor throughout a free swing arc. To this end, an already available monitoring means may be used, or a dedicated monitoring means may be deployed. The rotational velocity monitoring means can detect when the partial assembly is reaching the end of a "free swing" arc, so that the wind turbine controller can identify the optimal time at which to control the FSC to turn the rotor shaft further in the same direction to increase the total travel of the partial assembly.

The "back and forth" movements of the partial assembly are repeated, with increasingly larger arcs, until the hub has reached its final position. With each iteration, the FSC acts to extend the arc of travel of the partial assembly. In a particularly preferred embodiment of the invention, the sum of the initial arc and the total number of boost arcs (referred to in the following as the "total work arc") is significantly less than 120°, demonstrating that much of the work in turning the hub is achieved by exploiting the force of gravity.

The number of boost arcs (and therefore the number of iterations) required to bring the partial assembly to its final position can be determined in advance. In a preferred embodiment of the invention, the method comprises a prior step of determining the available power (for example the capacity of a backup battery) and the mass of the assembly (the "one-blade" partial assembly or the "two-blade" partial assembly). With this information, it is possible to determine a suitable total work arc, from which the lengths of the initial arc and the boost arcs can be determined. Finally, an appropriate control sequence for the FSC can be compiled. In this way, an operator can be certain that the power supply will suffice for the assembly procedure. This is of particular relevance when the power supply is a backup battery of the wind turbine.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows a wind turbine with one rotor blade mounted to the hub;
Figures 2 - 5 illustrate steps of the inventive method carried out on the wind turbine of Figure 1;
Figure 6 shows the wind turbine with two rotor blades mounted to the hub;
Figures 7 - 10 illustrate steps of the inventive method carried out on the wind turbine of Figure 6;
Figure 11 shows the wind turbine with all three rotor blades mounted to the hub;
Figure 12 shows a block diagram of a wind turbine during implementation of the inventive method to mount the rotor blades;
Figure 13 shows a block diagram of a wind turbine during implementation of a prior art method to mount the rotor blades
Figure 14 indicates the power consumption of the inventive method;
Figure 15 indicates the power consumption of a prior art method.

In the diagrams, like numbers refer to like objects throughout. Objects in the diagrams are not necessarily drawn to scale.

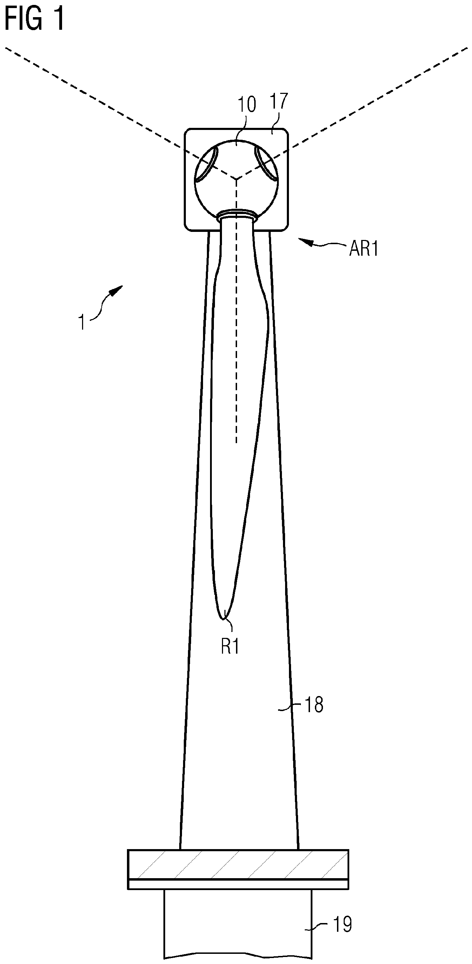

Figures 1 - 5 illustrate a first stage in the inventive method. An offshore wind turbine installation procedure is shown, but the description applies equally well to an onshore wind turbine. It shall be understood that the wind turbine 1 shown in the diagrams is equipped with a full-scale converter and a backup power supply that provides power to the full-scale converter. Such components can be housed in the nacelle 17 mounted at the top of a tower 18. Here, the tower 18 is supported by an offshore monopile 19, and assembly of the wind turbine can be done with the aid of an installation vessel and one or more cranes as will be known to the skilled person.

As shown in Figure 1, a first rotor blade R1 has been mounted to the hub 10 at the 6 o'clock position, so that the partial assembly AR1 comprises the hub 10 and one rotor blade R1. The diagram indicates a vertical mounting axis Mx that indicates the position of the longitudinal axis of a rotor blade during the mounting procedure. In order to mount the second rotor blade, the hub 10 must be turned through 120°, and in that position the first rotor blade R1 will have been brought to the 10 o'clock position (indicated by the line pointing towards the left-hand corner of the page).

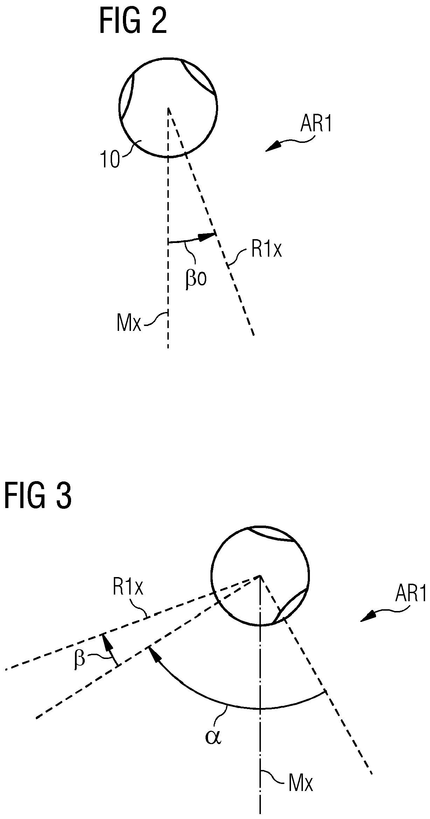

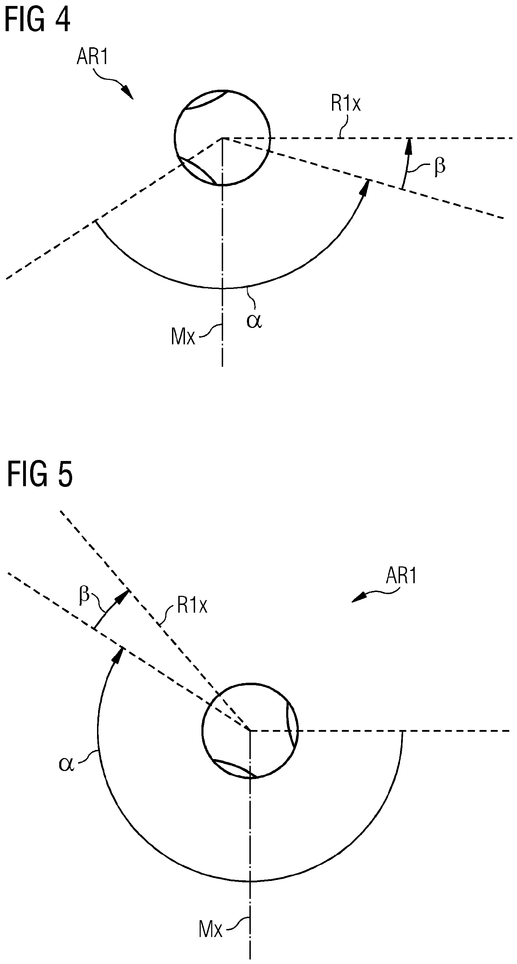

Instead of simply turning the hub 10 clockwise through 120° in a single step (resulting in large peak power consumption), the FSC of the wind turbine 1 is controlled to initially turn the hub 10 through an arc β₀ as shown in Figure 2 (for clarity, the first rotor blade R1 is indicated by its longitudinal axis R1x in these diagrams). The FSC then ceases to turn the rotor. Subsequently, under the force of gravity as illustrated in Figure 3, the partial assembly AR1 swings freely in the opposite direction. The momentum of the partial assembly allows it to swing through a "free swing" arc α, which (under favourable conditions) can even exceed the initial arc β₀. At some point during the free swing arc α, the angular velocity of the partial assembly AR1 reaches a maximum, and the FSC resumes control to turn the rotor further through an additional boost arc β. Then, as illustrated in Figure 4, the partial assembly AR1 is again allowed to freely swing back in the opposite direction. This time, the momentum of the partial assembly AR1 carries it through an even larger free swing arc α. Again, at a suitable instant, the FSC resumes control and turns the rotor shaft to extend the rotational travel by a boost arc β. These steps can be repeated as necessary to bring the partial assembly to its final position (for this stage of the assembly procedure) in which the first rotor blade R1 is at the 10 o'clock position as shown in Figure 5. In this example, the first rotor blade R1 reaches the 10 o'clock position after a total of four steps, with a final free swing arc α followed by a boost arc β. The FSC must only provide "boost" power through a total angular distance given by the sum of the initial arc β₀ and the boost arcs β, which sum is less than 120°. Furthermore, because the partial assembly AR1 is already in motion by the time the FSC works to turn the rotor through a boost arc β, the amplitude of the peak power does not exceed the upper limit of the backup power supply.

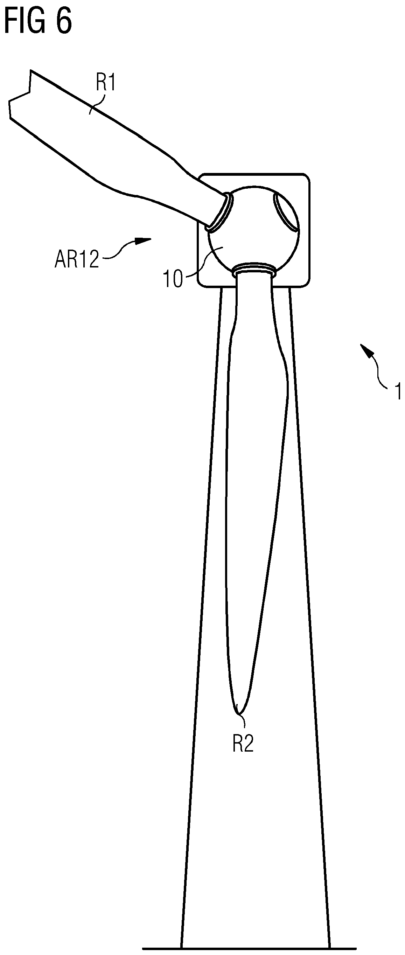

With the first rotor blade R1 at the 10 o'clock position (the final position for this stage of assembly), the second rotor blade R2 can be attached as shown in Figure 6, so that the partial assembly AR12 now comprises the hub 10 and two rotor blades R1, R2.

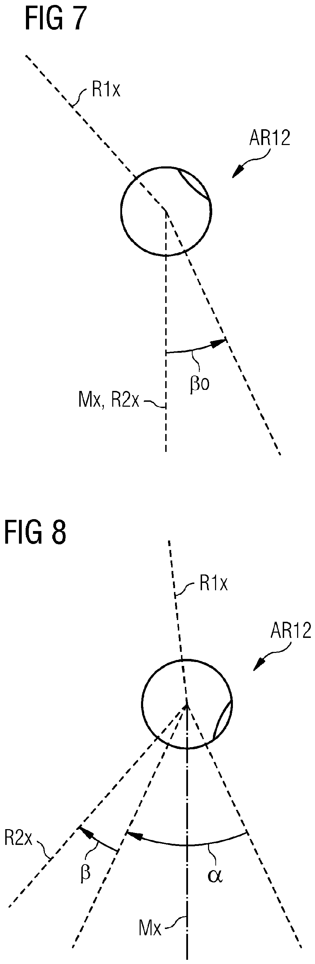

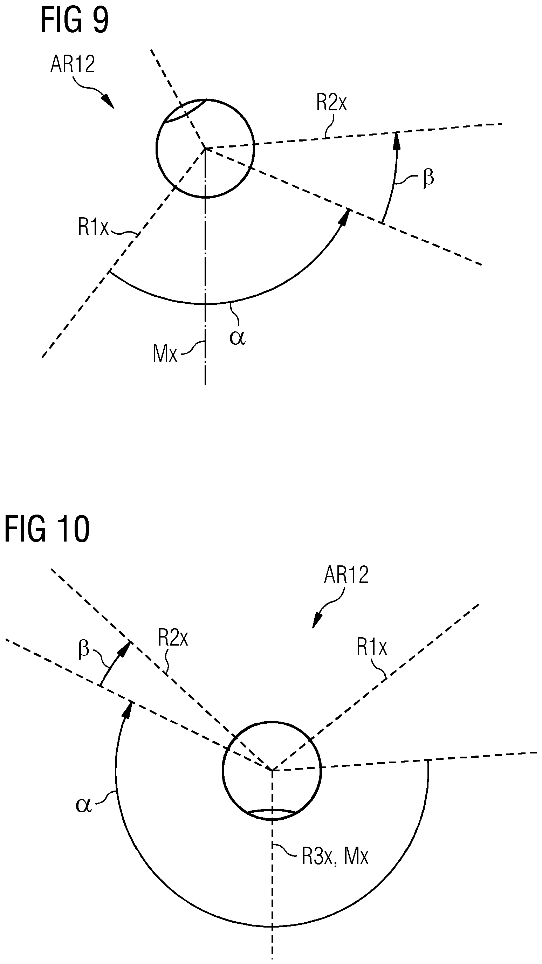

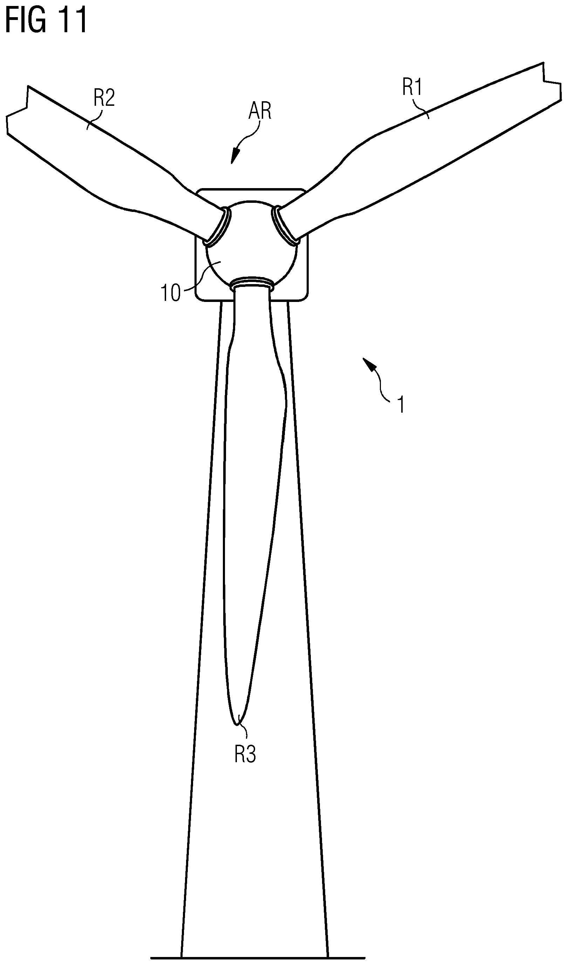

The mass of the partial assembly AR12 is now larger, as is the momentum when the partial assembly is allowed to swing back and forth as illustrated in Figures 8 - 10 through increasingly larger free swing arcs α. Again, the FSC needs only to turn the partial assembly AR12 through the first arc β₀ as shown in Figure 7 and to augment each gravity-driven swing of the partial assembly by an additional boost arc β as shown in Figures 8 - 10. After a sufficient number of iterations, the partial assembly AR12 reaches its desired orientation with the first rotor blade R1 at the 2 o'clock position and the second rotor blade R2 at the 10 o'clock position, so that the third rotor blade R3 can be mounted as shown in Figure 11 to complete the aerodynamic rotor AR.

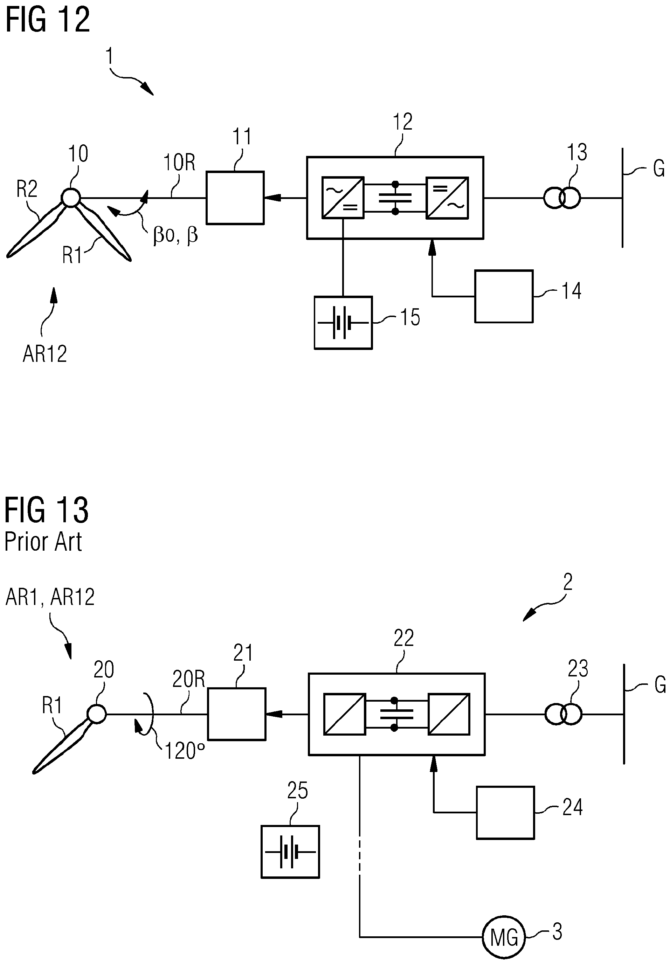

Figure 12 is a simplified diagram of a wind turbine 1, showing a partially assembled aerodynamic rotor AR12 and the rotor shaft 10R leading to the generator 11. A full-scale converter 12 is provided, which, during operation of the wind turbine 1, is controlled by the wind turbine controller 14 to convert the generator output power for export to the grid G via a step-up transformer 13 as will be known to the skilled person. During installation of the wind turbine 1, specifically during a rotor blade mounting procedure according to the invention, the FSC 12 is controlled to turn the rotor shaft 10R as described above in order to turn the partial assembly AR12 through the relatively small arcs β₀, β as described in Figures 2 - 5 and Figures 7 - 10 above. Power is supplied by the wind turbine backup power supply 15 as shown here. Because of the favourably low current required by the converter to turn the rotor shaft 10R (and the partial assembly AR12), there is no need for a larger external power supply such as a large diesel generator. In this way, material costs are reduced (no need to transport a large diesel generator to the installation site) and time is also saved (no need to connect and disconnect a diesel generator to the FSC).

Figure 13 shows a block diagram of a wind turbine during implementation of a prior art method to assemble the aerodynamic rotor. The wind turbine 2 has the same configuration shown in Figure 12, with a rotor shaft 20R leading to a generator 21; a full-scale converter 22; a wind turbine controller 24; a step-up transformer 23, etc.

Here, a first rotor blade R1 has already been mounted. The FSC 22 is then controlled to turn the rotor shaft 10R through 120° so that the second rotor blade R2 can be mounted. Subsequently, the FSC 22 is controlled to turn the rotor shaft 10R through another 120° so that the third rotor blade can be mounted. In order to provide the necessary torque to turn the first partial assembly AR1 and the heavier second partial assembly AR12, power is provided by an external power supply such as a 750 kW diesel generator 3, which can be conveyed to the installation site by an offshore installation vessel, for example. A large capacity generator 3 is necessary in order to move the total mass of the heavier partial assembly AR12 with two rotor blades R1, R2 (each of which can have a mass in the order of 30 tonnes), and this must be turned through 120° while working against the downward pull of gravity. A backup power supply 25 of the wind turbine 2 is unable to deliver the necessary peak current/voltage to effect a rotation of the partial assembly AR1, AR12 through 120°. The material costs of providing the external power supply 3 are significant, and are increased further by the time required to connect and disconnect the generator 3.

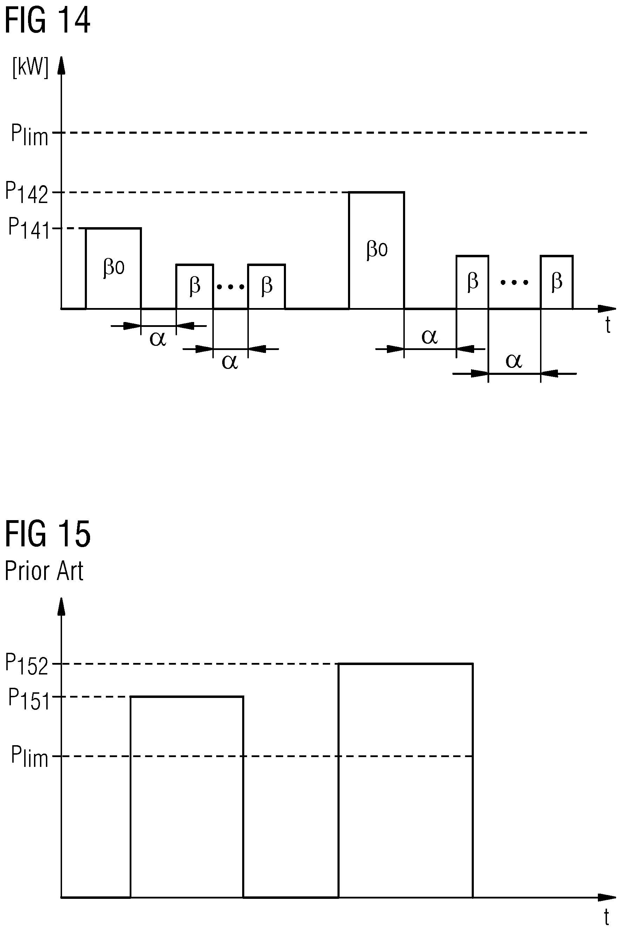

Figure 14 illustrates an advantage of the inventive method. The diagram shows the relationship between power consumption (Y-axis in kW) against time. The peak power P₁₄₁ required by the FSC to turning the first partial assembly AR1 through a relatively small arc β₀, β as described in Figures 2 - 5 does not exceed the upper limit Pₗᵢₘ of the backup power supply 15. Similarly, the peak power P₁₄₂ required by the FSC to turn the second partial assembly AR12 as described in Figures 7 - 10 also does not exceed the upper limit Pₗᵢₘ of the backup power supply 15. The diagram indicates that power is only required to turn the partial assembly AR1, AR12 through an arc β₀, β. Between these active turning stages, the partial assembly AR1, AR12 swings freely through a free swing arc α and power is not required.

In contrast, the prior art approach is to turn each partial assembly AR1, AR12 through 120°. The peak power P₁₅₁ required by the FSC to effect a rotation of the first partial assembly AR1 through 120° can already exceed the upper limit Pₗᵢₘ of the wind turbine's backup power supply, as shown in Figure 15, so that the larger external power supply 16 of Figure 13 is required. The peak power P₁₅₂ required by the FSC to effect a rotation of the second, heavier partial assembly AR12 through 120° is even greater.

Although the present invention has been disclosed in the form of preferred embodiments and variations thereon, it will be understood that numerous additional modifications and variations could be made thereto without departing from the scope of the invention. For example, instead of raising each rotor blade along a vertical mounting axis Mx as shown in the drawings, the mounting axis Mx may be horizontal.

For the sake of clarity, it is to be understood that the use of "a" or "an" throughout this application does not exclude a plurality, and "comprising" does not exclude other steps or elements.

## Claims

1. A method of mounting a wind turbine rotor blade (R2, R3) to a partial assembly (AR1, AR12), the partial assembly (AR1, AR12) comprising a number of rotor blades (R1) mounted to a hub (10) which in turn is connected to a rotor shaft (10R) of a wind turbine (1), the method comprising the steps of
A) effecting a rotation of the rotor shaft (10R) to turn the partial assembly (AR1, AR12) from its starting position through an initial arc (β₀);
B1) allowing the partial assembly (AR1, AR12) to swing through a free swing arc (α) in the opposite direction;
B2) effecting a rotation of the rotor shaft (10R) to extend the free swing arc (α) by a further arc (β);
C) repeating steps B1 and B2 until the partial assembly (AR1, AR12) has reached a final position at an angular displacement of 120° to the initial position.

2. A method according to the previous claim, wherein the wind turbine (1) comprises a full-scale converter (12), and a rotation of the rotor shaft (10R) is effected by control of the full-scale converter (12).

3. A method according to the previous claim, wherein the wind turbine (1) comprises a backup power supply (15) arranged to provide power to the full-scale converter (12) during the rotor blade mounting procedure.

4. A method according to any of the previous claims, wherein the final position is at an angular displacement of 120° relative to the initial position.

5. A method according to any of the previous claims, wherein the initial arc (β₀) comprises at most 40°.

6. A method according to any of the previous claims, wherein a further arc (β) comprises at most 20°, more preferably at most 10°.

7. A method according to any of the previous claims, wherein the sum of the initial arc (β₀) and the further arcs (β) is at most 80°, more preferably at most 60°.

8. A method according to any of the previous claims, comprising a step of determining the power consumption required to turn the partial assembly (AR1, AR12) through a further arc (β).

9. A method according to any of the previous claims, wherein a rotation of the rotor shaft (10R) to extend the free swing arc (α) by a further arc (β) is effected when the rotational speed of the partial assembly (AR1, AR12) decreases to a predetermined threshold.

10. A method according to any of the previous claims, wherein a rotor blade (R1, R2, R3) is held in a vertical orientation during mounting to the hub (10).

11. A wind turbine (1) comprising
- a generator (11);
- a full-scale converter (12) arranged between the generator (11) and a grid (G);
- a hub (10) connected via a rotor shaft (10R) to the generator (11);
- a controller (14) configured to control the full-scale converter (12) to carry out the steps of the method according to any of claims 1 to 9 during the rotor blade mounting procedure.

12. A wind turbine according to the previous claim, wherein the wind turbine (1) comprises a backup power supply (15) arranged to provide power to the full-scale converter (12) during the rotor blade mounting procedure.

13. A wind turbine according to claim 11 or claim 12, wherein the backup power supply (15) comprises a solid-state battery.

14. A wind turbine according to any of claims 11 to 13, comprising a means of monitoring the rotational velocity of the rotor shaft (10R) throughout a free swing arc (α).

15. A wind turbine according to any of claims 10 to 14, wherein the wind turbine is an offshore wind turbine (1).
